Europäisches Patentamt

European Patent Office

Office européen des brevets

(19)

(11) Veröffentlichungsnummer: **0 299 195**
**A2**

## (12) EUROPÄISCHE PATENTANMELDUNG

(21) Anmeldenummer: 88108999.9

(51) Int. Cl.⁴ **G05D 7/01**

(22) Anmeldetag: 06.06.88

(30) Priorität: 14.07.87 DE 3723256

(43) Veröffentlichungstag der Anmeldung:
**18.01.89 Patentblatt 89/03**

(84) Benannte Vertragsstaaten:
**AT BE CH DE ES FR GB GR IT LI LU NL SE**

(71) Anmelder: **WIGHA ELEKTRONISCHE MESSTECHNIK GMBH**

**D-8057 Eching(DE)**

(72) Erfinder: **Der Erfinder hat auf seine Nennung verzichtet**

(74) Vertreter: **Patentanwälte Dr. Solf & Zapf**
**Zeppelinstrasse 53**
**D-8000 München 80(DE)**

(54) **Vorrichtung zum Messen und Regeln eines Gasmassenflusses.**

(57) Die Erfindung betrifft eine Vorrichtung zum Messen und Regeln des Massendurchflusses von Gasen durch ein Bypaßsystem mit einer Sensorröhrcheneinrichtung, einem Regelventil und einem elektronischen Bauteil zum Erfassen und Verwerten von der Sensoreinrichtung entstammenden Meßwerten zum Regeln des Regelventils sowie mit einem Grundkörper aus Metall, der einen Gasdurchgangskanal aufweist, der mit einer Einlaß- und einer Auslaßverschraubung in Verbindung steht, wobei vom Gasdurchgangskanal zwei Kanäle zur Sensoreinrichtung abzweigen, das Regelventil Zugang zum Gasdurchgangskanal hat und zwischen den Sensorkanälen und dem Regelventilzugang eine Bypaßeinrichtung angeordnet ist, wobei der Gasdurchgangskanal (6) von einer Bypaßsackbohrung (7) durchquert wird, wobei im Bereich der Eintrittsöffnung (10) des Gasdurchgangskanals (6) in die Bypaßbohrung (7) und im Bereich der Austrittsöffnung (11) des Gasdurchgangskanals (6) aus der Bypaßbohrung (7) die Sensorkanäle (13, 14) münden und daß in der Bypaßsackbohrung (7) mit Gleitsitz ein Bypaßzylinder sitzt, wobei der Gleitsitz derart ausgebildet ist, daß ein von Gas durchfließbarer Freiraum, vorzugsweise ein Spalt, zwischen der Mantelfläche des Bypaßzylinders und der Innenfläche der Bypaßsackbohrung (7) verbleibt.

Fig. 1

EP 0 299 195 A2

## Vorrichtung zum Messen und Regeln eines Gasmassenflusses

Die Erfindung betrifft eine Vorrichtung zum Messen und Regeln eines Gasmassenflusses nach dem Oberbegriff des Anspruchs 1.

Derartige Gasflußmeß- und Gasflußkontrollgeräte messen und regeln den Massendurchfluß von Gasen durch ein Bypaßsystem, indem ein Teilstrom durch ein Sensorröhrchen geleitet wird. Dem Sensorröhrchen sind im Abstand voneinander auf der Außenseite zwei Widerstandsthermometer zugeordnet. Mit einer Brückenschaltung wird die Temperaturdifferenz zwischen den beiden Thermometern erfaßt und in ein Signal umgewandelt, das zur Steuerung eines im Gasstrom sitzenden Regelventils verwendet wird. Die Steuerung wird mit einem eine gedruckte Schaltung enthaltenden elektrischen Bauteil gewährleistet, das auch die Sensoreinrichtung enthält.

Das Meßgerät weist einen quaderförmigen Grundkörper aus Edelstahl auf. Von einer Frontseite erstreckt sich zur anderen Frontseite des Grundkörpers ein Gasdurchgangskanal, wobei Einlaß- und Auslaßverschraubungen im Bereich der Frontseiten zum Anschluß von Gasleitungen vorgesehen sind. Im Gasdurchgangskanal sitzt eine Bypaßvorrichtung. In Gasflußrichtung vor und hinter der Bypaßvorrichtung zweigt senkrecht dazu jeweils eine kleinere Sensorbohrung zur Oberseite des Grundkörpers ab, die die Wandung des Grundkörpers durchdringen und die mit dem Sensorröhrchen in Verbindung stehen. In Gasflußrichtung hinter der zweiten bzw. der hinteren Sensorbohrung durchdringt eine größere Ventilbohrung die Wandung des Grundkörpers und mündet senkrecht im Gasdurchgangskanal. Die Ventilbohrung, in der das Regelventil sitzt, erstreckt sich zweckmäßigerweise parallel zu den Sensorbohrungen in derselben Wandung des Grundkörpers.

Die Bypaßvorrichtung soll den Gasstrom in einen Hauptstrom und einen kleineren Teilstrom aufspalten. Der Hauptstrom fließt weiter in Richtung Regelventil. Der Teilstrom geht durch die vordere Sensorbohrung, gelangt in das Sensorröhrchen und fließt über die hintere Sensorbohrung wieder in den Hauptstrom vor dem Regelventil.

Die Bypaßvorrichtung besteht bei den bekannten Geräten aus einer Schraubhülse und einem in der Hülse gelagerten porösen Metallzylinder mit einem Boden. Die Porosität und Größe des Metallzylinders ergibt ein Maß für die Teilmenge des Gasstroms, der durch das Sensorröhrchen geleitet wird. Demgemäß muß bei Änderung der Teilmenge auch die Bypaßvorrichtung gewechselt werden. Dieses Auswechseln ist zeitaufwendig und erfordert eine erhebliche Lagerhaltung von Auswechselteilen. Außerdem ist die Porosität von einem zum anderen Metallzylinder nicht gleich. Die Bypaßvorrichtung besteht außerdem aus relativ teuren Einzelteilen.

Aufgabe der Erfindung ist, eine Bypaßvorrichtung zu schaffen, die einfach aufgebaut und leicht auswechselbar ist sowie gegebenenfalls für unterschiedliche Durchflußmengen regelbar ist.

Diese Aufgabe wird durch die Merkmale des Hauptanspruchs gelöst. Vorteilhafte Weiterbildungen der Erfindung werden in den Unteransprüchen gekennzeichnet. Anhand der Zeichnung wird die Erfindung beispielhaft näher erläutert. Es zeigen:

Fig. 1 einen Längsschnitt durch den Grundkörper,

Fig. 2 einen Querschnitt entlang der Linie A-A in Fig. 1,

Fig. 3 eine Seitenansicht des Bypaßzylinders,

Fig. 4 einen Querschnitt durch den Bypaßzylinder.

Der Grundkörper 1 aus Metall weist einen üblichen Gaseintrittsanschluß 2 im Bereich der vorderen Frontseite 4 des Grundkörpers 1 und einen üblichen Gasaustrittsanschluß 3 im Bereich der rückwärtigen Frontseite 5 des Grundkörpers 1 auf. Zentral erstreckt sich vom Gaseintrittsanschluß 2 bis kurz vor den Gasaustrittsanschluß 3 eine Gassackbohrung 6. Die Gassackbohrung 6 wird von einer Bypaßsackbohrung 7 größeren Durchmessers durchquert, die sich von der einen Längsseitenfläche 8 zur anderen Längsseitenfläche 9 des Grundkörpers 1 erstreckt und in kurzem Abstand zu der Längsseitenfläche 9 endet. Im Bereich der Eintrittsöffnung 10 der Gassackbohrung 6 in die Bypaßsackbohrung 7 und im Bereich der Austrittsöffnung 11 der Gassackbohrung 6 aus der Bypaßsackbohrung 7 ist jeweils eine sich bis zur Oberfläche 12 des Grundkörpers 1 erstreckende Sensorbohrung 13, 14 senkrecht nach oben gehend angeordnet. Der Durchmesser der Sensorbohrungen 13, 14 ist kleiner als der Durchmesser der Gassackbohrung 6.

Am Ende der Gassackbohrung 6 ist eine weitere sich zur Oberfläche 12 des Grundkörpers 1 erstreckende Gasflußbohrung 15 eingebracht, deren Durchmesser etwa dem Durchmesser der Sensorbohrungen 13, 14 entspricht. Neben der Gasflußbohrung 15 ist eine weitere Gasflußbohrung 16 vorgesehen, die von der Oberfläche 12 des Grundkörpers 1 zum Gasaustritt 3 führt.

Zweckmäßigerweise ist die Bypaßsackbohrung 7 mit einer Flanschringausnehmung 20 versehen, von deren Ringfläche mehrere Gewindebohrungen 21 in die Wandung des Grundkörpers 1 gehen.

Die Sensorbohrungen 13, 14 haben Verbindung mit dem Sensorröhrchen (nicht dargestellt) und die Gasflußbohrungen 15, 16 mit dem Regelventil (nicht dargestellt). Ebenfalls nicht dargestellt sind die Elektronik-Bauelemente, die den üblichen Elementen entsprechen.

Nach der Erfindung sitzt in der Bypaßsackbohrung 7 mit Gleitsitz ein Bypaßzylinder 17, wobei der Gleitsitz derart ausgebildet ist, daß der Hauptstrom des Gases laminar über die Mantelfläche des Bypaßzylinders 17 fließt, wobei der Teilstrom über die Mündung der Sensorbohrung 13 abzweigt, durch das Sensorröhrchen (nicht dargestellt) läuft und durch die Sensorbohrung 14 wieder zum Hauptstrom in der Gassackbohrung 6 stößt.

Der Bypaßzylinder 17 weist einen Flanschring 18 mit Schraubenlöchern 19 auf. Er sitzt formschlüssig in der Flanschringausnehmung 20, wobei Schrauben für die Befestigung sorgen.

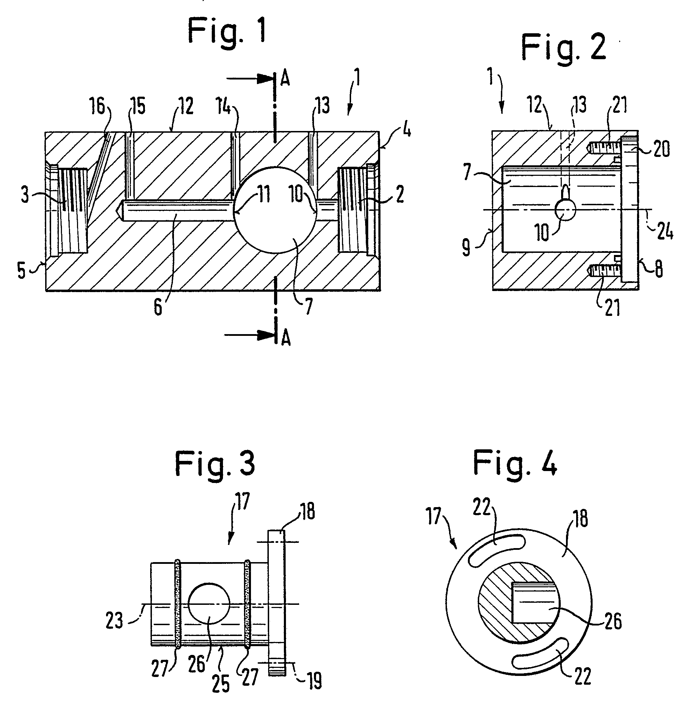

Nach einer besonderen Ausführungsform der Erfindung weist der Flanschring 18 - entsprechend Fig. 4 - kreisbogenförmige Langlöcher 22 auf, so daß der Bypaßzylinder 17 um seine Längsachse 23 gedreht und in verschiedenen gedrehten Stellungen befestigt werden kann. Im Zusammenhand damit kann vorgesehen sein, daß der Bypaßzylinder 17 z.B. unrund ist oder daß seine Längsachse 23 nicht mit der Längsachse 24 der Bypaßsackbohrung 7 zusammenfällt, so daß durch Drehen des Bypaßzylinders 17 um seine Längsachse 23 das Volumen des Spalts des Gleitsitzes zwischen der Bypaßsackbohrung 7 und der Mantelfläche 25 des Bypaßzylinders 18 vergrößert oder verkleinert wird. Dadurch ergeben sich unterschiedliche Durchflußmengen bzw. ergibt sich eine Regelmöglichkeit des Geräts.

Nach einer weiteren Ausführungsform der Erfindung kann im Zusammenhang mit der drehbaren Anordnung des Bypaßzylinders 17 vorgesehen sein, daß der Bypaßzylinder 17 eine quer zur Längserstreckung des Bypaßzylinders verlaufende Sackbohrung 26 aufweist. Gerät die Mündung der Sackbohrung 26 mehr oder weniger in den Gasstrom, ergibt sich eine entsprechende Gasflußmenge.

Nach einer weitergehenden Ausführungsform der Erfindung ist anstelle der Sackbohrung 26 eine durchgehende Bohrung im Bypaßzylinder 17 angeordnet.

Die Abdichtung zum Flanschring 18 und die Gleitführung bzw. Parallelführung des Bypaßzylinders 17 erfolgt zweckmäßigerweise mit O-Ringen 27, die seitlich neben der Sackbohrung 6 auf dem Bypaßzylinder 17 angeordnet sind.

Die Vorteile der Erfindung sind ungewöhnlich. Das Auswechseln des Bypaßzylinders ist sehr einfach. Das gesamte Bypaßsystem ist sehr einfach aufgebaut und leicht herstellbar. Die Bypaßvorrichtung ist regelbar durch Drehen des Bypaßzylinders um seine Längsachse.

Der Grundkörper kann kürzer ausgeführt werden als bei den herkömmlichen Geräten, weil die Bypaßvorrichtung nicht so viel Raum erfordert wie die herkömmlichen Vorrichtungen. Es sind keine Gewindebohrungen mehr in der Gasflußsackbohrung einzubringen. Insgesamt ergibt sich ein Grundkörper, der außerordentlich einfach herstellbar ist, eine einfache Auswechselbarkeit der Bypaßvorrichtung gewährleistet, leicht zu reinigen ist und eine sehr zuverlässige Aufspaltung der Gasteilströme bewirkt. Wesentlich ist, daß Turbulenzen im Teilgasstrom ausgeschlossen werden können. Dies wird insbesondere durch den Ringspalt zwischen der Oberfläche des Bypaßzylinders und der Oberfläche der Bypaßsackbohrung gewährleistet.

**Ansprüche**

1. Vorrichtung zum Messen und Regeln des Massendurchflusses von Gasen durch ein Bypaßsystem mit einer Sensorröhrcheneinrichtung, einem Regelventil und einem elektronischen Bauteil zum Erfassen und Verwerten von der Sensoreinrichtung entstammenden Meßwerten zum Regeln des Regelventils sowie mit einem Grundkörper aus Metall, der einen Gasdurchgangskanal aufweist, der mit einer Einlaß- und einer Auslaßverschraubung in Verbindung steht, wobei vom Gasdurchgangskanal zwei Kanäle zur Sensoreinrichtung abzweigen, das Regelventil Zugang zum Gasdurchgangskanal hat und zwischen den Sensorkanälen und dem Regelventilzugang eine Bypaßeinrichtung angeordnet ist, dadurch **gekennzeichnet,** daß der Gasdurchgangskanal (6) von einer Bypaßsackbohrung (7) durchquert wird, wobei im Bereich der Eintrittsöffnung (10) des Gasdurchgangskanals (6) in die Bypaßbohrung (7) und im Bereich der Austrittsöffnung (11) des Gasdurchgangskanals (6) aus der Bypaßbohrung (7) die Sensorkanäle (13, 14) münden und daß in der Bypaßsackbohrung (7) mit Gleitsitz ein Bypaßzylinder (17) sitzt, wobei der Gleitsitz derart ausgebildet ist, daß ein von Gas durchfließbarer Freiraum, vorzugsweise ein Spalt, zwischen der Mantelfläche des Bypaßzylinders (17) und der Innenfläche der Bypaßsackbohrung (7) verbleibt.

2. Vorrichtung nach Anspruch 1, dadurch **gekennzeichnet,** daß der Bypaßzylinder (17) um seine Längsachse drehbar in der Bypaßsackbohrung (7) steckt, wobei die Längsachse (23) des Bypaßzylinders (17) nicht mit der Längsachse (24) der Bypaßsackbohrung (7) zusammenfällt.

3. Vorrichtung nach Anspruch 1 und/oder 2, dadurch **gekennzeichnet,** daß der Bypaßzylinder (17) eine quer zur Längserstreckung des Bypaßzylinders verlaufende Sackbohrung (26) aufweist.

4. Vorrichtung nach Anspruch 3, dadurch **gekennzeichnet,** daß die Längsachse der Sackbohrung (26) die Längsachse des Gasdurchgangskanals (6) schneidet oder mit ihr zusammenfällt.

5. Vorrichtung nach einem oder mehreren der Ansprüche 1 bis 3, dadurch **gekennzeichnet,** daß im Bypaßzylinder (17) eine durchgehende Bohrung angeordnet ist.

6. Vorrichtung nach Anspruch 5, dadurch **gekennzeichnet,** daß die Längsachse der Bohrung die Längsachse des Gasdurchgangskanals (6) schneidet oder mit ihr zusammenfällt.

7. Vorrichtung nach einem oder mehreren der Ansprüche 1 bis 6, dadurch **gekennzeichnet,** daß seitlich neben dem Gasdurchgangskanal (6) auf dem Bypaßzylinder (17) jeweils ein O-Ring (27) angeordnet ist.

8. Vorrichtung nach einem oder mehreren der Ansprüche 1 bis 7, dadurch **gekennzeichnet,** daß die Bypaßsackbohrung (7) mit einer Flanschring ausnehmung (20) versehen ist und daß der Bypaßzylinder (17) einen Flanschring (18) aufweist. der formschlüssig in der Flanschringausnehmung (20) sitzt, wobei eine Schraubverbindung für die Befestigung des Bypaßzylinders (17) zwischen Flanschring (18) und Flanschringausnehmung (20) vorgesehen ist.

9. Vorrichtung nach Anspruch 8, dadurch **gekennzeichnet,** daß für die Schraubverbindung kreisbogenförmige Langlöcher (22) im Flanschring (18) angeordnet sind.

10. Vorrichtung nach einem oder mehreren der Ansprüche 1 bis 9, dadurch **gekennzeichnet,** daß der Gasdurchgangskanal (6) als Sackbohrung ausgeführt ist, wobei am Ende der Sackbohrung ein Kanal (15) mündet, der den Grundkörper (1) durchdringt und neben dem Kanal (15) ein weiterer Kanal (16) vorgesehen ist, der von der Oberfläche des Grundkörpers (1) zum Gasaustritt (3) des Grundkörpers (1) führt, wobei die Kanäle (15 und 16) mit dem Regelventil in Verbindung stehen.

11. Vorrichtung nach einem oder mehreren der Ansprüche 1 bis 10, dadurch **gekennzeichnet,** daß die Bypaßsackbohrung (7) einen größeren Durchmesser aufweist als die Bohrung des Gasdurchgangskanals (6).

12. Vorrichtung nach Anspruch 11, dadurch **gekennzeichnet,** daß die Sensorkanäle (13, 14) Bohrungen gleichen Durchmessers sind, wobei dieser Durchmesser kleiner ist als der Durchmesser der Bohrung des Gasdurchgangskanals (6).

Fig. 1

Fig. 2

Fig. 3

Fig. 4